# FASCICULE DE BREVET EUROPEEN

(11) **EP 2 033 880 B1**
(45) Date de publication et mention de la délivrance du brevet: **11.05.2011**
(21) Numéro de dépôt: 08305431.2
(22) Date de dépôt: 29.07.2008
(51) Int. Cl.: B62D 25/12

(54) **Capot de véhicule automobile**
Verdeck eines Kraftfahrzeugs
Automobile bonnet

(30) Priorité: 06.09.2007 FR 0757383
(43) Date de publication de la demande: 11.03.2009
(73) Titulaire: PEUGEOT CITROËN AUTOMOBILES S.A., 78140 Vélizy Villacoublay (FR)
(72) Inventeur: Brefort, Laurent, 78280, GUYANCOURT (FR); Gaudiller, Régis, 92160, ANTONY (FR)

(56) Documents cités:
- EP-A- 1 300 323
- EP-A- 1 452 680
- WO-A-2004/067322
- GB-A- 2 343 419

## Description

La présente invention concerne une structure de capot de véhicule automobile.

On connaît déjà dans l'état de la technique des véhicules automobiles comportant un capot muni d'une peau extérieure et d'une doublure intérieure, la peau extérieure étant fixée à la doublure intérieure, d'une part, à sa périphérie, par exemple par sertissage et, d'autre part, à l'intérieur de cette périphérie, par exemple par des cordons de calage.

Le document EP 1 300 323 présente de façon très schématique une zone avant de capot où la doublure intérieure est reliée à la peau extérieure, uniquement par la périphérie de cette peau extérieure.

Les cordons de calage présentent l'avantage d'éviter la présence de marques sur la peau extérieure du capot, ce qui nuirait à l'esthétique du véhicule. Ils sont constitués de matière organique qui se fige lorsque la caisse du véhicule est passée en étuve cataphorèse lors du traitement anticorrosion du véhicule, ils assurent alors la liaison des éléments du capot.

Or, une telle structure de capot présente l'inconvénient d'être rigide, ce qui est habituellement appelé effet « peau de tambour ».

Ce comportement de la structure de capot entraîne des mauvais résultats pour les tests de choc piéton, notamment pour le choc tête.

L'invention a pour but de fournir une structure de capot de véhicule automobile, présentant de meilleurs résultats aux tests de choc piéton.

A cet effet, l'invention a pour objet un capot de véhicule automobile conformément à la revendication 1.

Grâce à l'invention, la structure de capot est assouplie dans la zone avant, ce qui permet de meilleurs résultats aux tests de choc piéton, notamment pour le choc tête. En outre, de la matière est économisée par l'absence de cordon de calage dans cette zone avant, ce qui présente un intérêt économique.

Selon d'autres caractéristiques de l'invention,
- la doublure intérieure est reliée par sertissage à la peau extérieure par la périphérie,
- dans la zone avant et au-delà de 50 millimètres du bord avant du capot, la doublure intérieure s'étend à 6 millimètres ou plus de la peau extérieure,
- la doublure intérieure est en outre fixée à la peau extérieure en dehors de la zone avant et à l'intérieur de la périphérie,
- la doublure intérieure est fixée à la peau extérieure en dehors de la zone avant et à l'intérieur de la périphérie par au moins un cordon de calage,
- la zone avant s'étend sur une dimension de 285 millimètres par rapport au bord avant du capot selon la direction longitudinale du véhicule.

L'invention a également pour objet un véhicule automobile caractérisé en ce qu'il comprend un capot tel que définit précédemment.

L'invention sera mieux comprise à l'aide de la description qui va suivre, donnée uniquement à titre d'exemple et faite en se référant aux dessins annexés, parmi lesquels :
- la figure 1 est une vue en coupe longitudinale d'une partie avant d'un véhicule automobile,
- la figure 2 est une vue de face de la face interne du capot, et
- la figure 3 est une vue en coupe transversale du capot dans sa zone avant selon la ligne IV-IV de la figure 2.

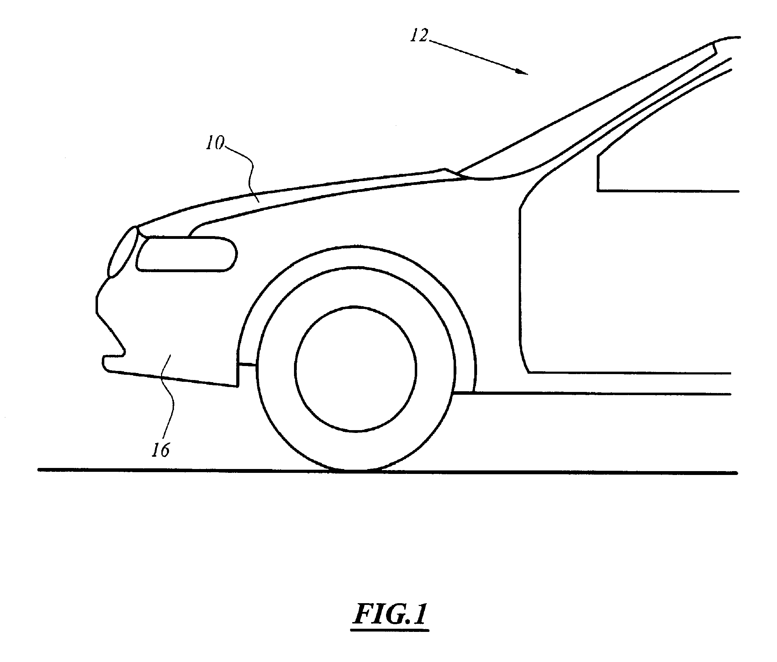

On a représenté à la figure 1, une partie avant d'un véhicule automobile 12. Elle comprend classiquement un capot 10 disposé en avant d'un pare-brise 26 et un pare-chocs 16.

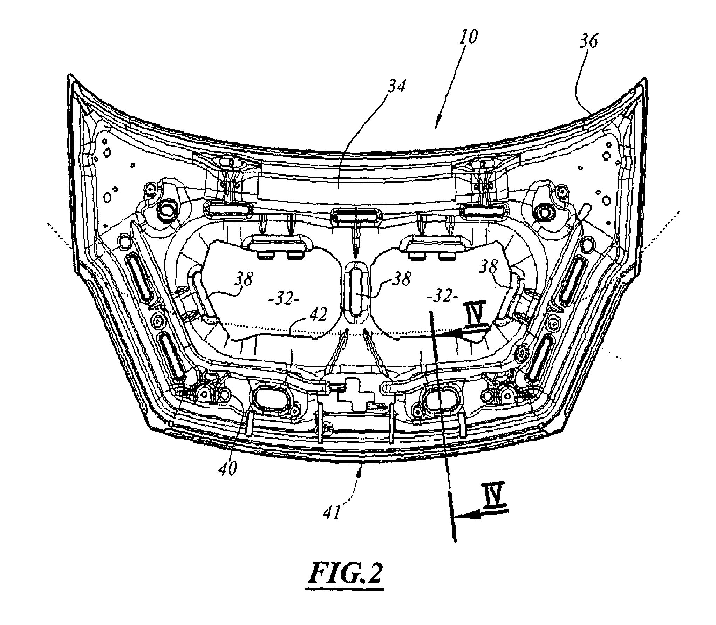

On a représenté sur la figure 2, la face interne d'un capot 10 selon un mode de réalisation de l'invention. Le capot comporte une peau extérieure 32, réalisée par exemple en aluminium ou encore en acier, et une doublure intérieure 34 réalisée par exemple dans le même matériau.

La peau extérieure 32 et la doublure intérieure 34 ont des dimensions sensiblement identiques afin qu'il soit possible de les superposer en disposant leurs périphéries l'une sur l'autre. Les périphéries étant ainsi sensiblement confondues, on parlera de la périphérie du capot 10, désignée par la référence unique 36.

La doublure intérieure 34 est tout d'abord reliée à la peau extérieure 32 généralement par sertissage à la périphérie 36. De préférence, le sertissage est réalisé sensiblement en continu sur la totalité de la périphérie 36. D'autres modes d'assemblage peuvent être utilisés tel que le clinchage, le rivetage ou le soudage.

En outre, la peau extérieure 32 est fixée à la doublure intérieure 34 à l'intérieur de la périphérie 36 par des cordons de calage 38. Généralement ces cordons sont situés plus particulièrement en périphérie de zones ajourées de la doublure intérieure 34.

Selon l'invention, ces cordons de calage 38 sont tous situés en dehors d'une zone avant 40 du capot 10, cette zone est située entre le bord avant du capot 41 et une limite désignée par la référence 42. Ainsi, dans cette zone avant 40, la doublure intérieure 34 est uniquement fixée à la peau extérieure 32 par la périphérie 36. La limite 42 s'étend sensiblement parallèlement au bord avant du capot 41.

D'une manière générale, la zone avant 40 possède entre le bord avant 41 et la limite 42 une dimension d'au moins de 250 mm selon la direction longitudinale du véhicule.

De préférence, la zone avant 40 possède entre le bord avant 41 et la limite 42 une dimension de 285 mm selon la direction longitudinale du véhicule. De bons résultats sont également obtenus pour une dimension de 250 mm. Il est à noter que ces dimensions sont indépendantes de la longueur du capot.

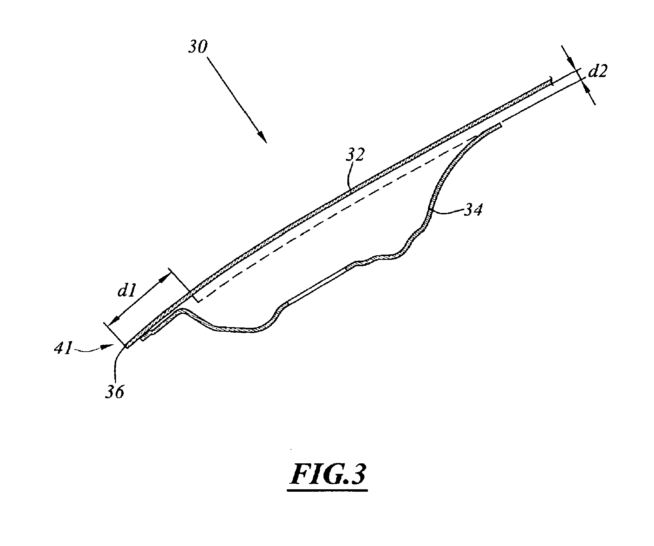

En référence à la figure 3 et à titre d'exemple, dans cette zone avant 40, la doublure intérieure 34 est située à au moins une distance d2 de 6 mm de la peau extérieure 32, sauf dans une zone située sur une distance d1 de 50 mm définie à partir du bord avant 41.

Cette distance minimale d2 permet d'éviter tout bruit de tôle lorsque le capot 10 est sollicité, par exemple lors d'un lavage de la voiture.

Grâce à l'invention, une souplesse supplémentaire est fournie à la peau extérieure, dans la zone avant du capot, de par l'absence de cordon de calage et de tout autre moyen de liaison entre la peau extérieure et la doublure intérieure. Ainsi, le capot selon l'invention offre de meilleurs résultats aux tests de chocs tête piétons : il amortit la tête du piéton et diminue les risques de blessure de ce dernier.

## Revendications

1. Capot (10) de véhicule automobile muni d'une peau extérieure (32) et d'une doublure intérieure (34), la doublure intérieure (34) étant reliée à la peau extérieure (32), sur une zone avant (40) du capot (10), uniquement par la périphérie (36) de cette peau extérieure, **caractérisé en ce que** la peau extérieure et la doublure intérieure possèdent des dimensions sensiblement identiques, les périphéries de la peau (32) et de la doublure (34) étant disposées de manière à se superposer, et **en ce que** la zone avant (40) s'étend sur une dimension d'au moins de 250 millimètres par rapport au bord avant du capot (41) selon la direction longitudinale du véhicule.

2. Capot (10) de véhicule automobile selon la revendication 1, **caractérisé en ce que** la doublure intérieure (34) est reliée par sertissage à la peau extérieure (32) par la périphérie (36).

3. Capot (10) de véhicule automobile selon la revendication 1 ou 2, **caractérisé en ce que**, dans la zone avant (40) et au-delà de 50 millimètres du bord avant du capot (41), la doublure intérieure (34) s'étend à 6 millimètres ou plus de la peau extérieure (32).

4. Capot (10) de véhicule automobile selon l'une quelconque des revendications 1 à 3, **caractérisé en ce que** la doublure intérieure (34) est en outre fixée à la peau extérieure (32) en dehors de la zone avant (40) et à l'intérieur de la périphérie (36).

5. Capot (10) de véhicule automobile selon la revendication 4, **caractérisé en ce que** la doublure intérieure (34) est fixée à la peau extérieure (32) en dehors de la zone avant (40) et à l'intérieur de la périphérie (36) par au moins un cordon de calage (38).

6. Capot (10) de véhicule automobile selon l'une quelconque des revendications 1 à 5, **caractérisé en ce que** la zone avant (40) s'étend sur une dimension de 285 millimètres par rapport au bord avant du capot (41) selon la direction longitudinale du véhicule.

7. Véhicule automobile, **caractérisé en ce qu'**il comprend un capot selon l'une quelconque des revendications précédentes.

## Claims

1. Motor vehicle bonnet (10), provided with an outer skin (32) and an inner lining (34), the inner lining (34) being attached to the outer skin (32) in a front region (40) of the bonnet (10) solely by the periphery (36) of said outer skin, **characterised in that** the outer skin and the inner lining are of substantially identical size, the peripheries of the skin (32) and the lining (34) being arranged one above the other, and **in that** the front region (40) extends over a distance of at least 250 millimetres from the front edge of the bonnet (41) in the longitudinal direction of the vehicle.

2. Motor vehicle bonnet (10) according to claim 1, **characterised in that** the inner lining (34) is attached to the outer skin (32) at the edge (36) by crimping.

3. Motor vehicle bonnet (10) according to either claim 1 or claim 2, **characterised in that**, in the front region (40) and more than 50 millimetres from the front edge of the bonnet (41), the inner lining (34) extends 6 millimetres or more from the outer skin (32).

4. Motor vehicle bonnet (10) according to any one of claims 1 to 3, **characterised in that** the inner lining (34) is also fixed to the outer skin (32) outside the front region (40) and inside the periphery (36).

5. Motor vehicle bonnet (10) according to claim 4, **characterised in that** the inner lining (34) is fixed to the outer skin (32) outside the front region (40) and inside the periphery (36) by at least one fitting strip (38).

6. Motor vehicle bonnet (10) according to any one of claims 1 to 5, **characterised in that** the front region (40) extends over a distance of 285 millimetres from the front edge of the bonnet (41) in the longitudinal direction of the vehicle.

7. Motor vehicle, **characterised in that** it comprises a bonnet according to any one of the preceding claims.

## Patentansprüche

1. Motorhaube (10) eines Kraftfahrzeugs, versehen mit einer Außenhaut (32) und mit einer Innenschale (34), wobei die Innenschale (34) mit der Außenhaut (32) in einem vorderem Bereich (40) der Motorhaube (10) nur durch den Umfang (36) dieser Außenhaut verbunden ist, **dadurch gekennzeichnet, dass** die Außenhaut und die Innenschale im Wesentlichen gleiche Abmessungen besitzen, wobei die Umfänge der Haut (32) und der Schale (34) so angeordnet sind, dass sie übereinander liegen, und dass der vordere Bereich (40) sich über eine Abmessung von mindestens 250 Millimetern bezüglich des vorderen Rands der Motorhaube (41) in Längsrichtung des Fahrzeugs erstreckt.

2. Kraftfahrzeug-Motorhaube (10) nach Anspruch 1, **dadurch gekennzeichnet, dass** die Innenschale (34) durch Bördelverbindung mit der Außenhaut (32) durch den Umfang (36) verbunden ist.

3. Kraftfahrzeug-Motorhaube (10) nach Anspruch 1 oder 2, **dadurch gekennzeichnet, dass** im vorderen Bereich (40) und jenseits von 50 Millemetern vom vorderen Rand der Motorhaube (41) die Innenschale (34) in 6 Millimetern oder mehr von der Außenhaut (32) verläuft.

4. Kraftfahrzeug-Motorhaube (10) nach einem der Ansprüche 1 bis 3, **dadurch gekennzeichnet, dass** die Innenschale (34) außerdem an der Außenhaut (32) außerhalb des vorderen Bereichs (40) und innerhalb des Umfangs (36) befestigt ist.

5. Kraftfahrzeug-Motorhaube (10) nach Anspruch 4, **dadurch gekennzeichnet, dass** die Innenschale (34) an der Außenhaut (32) außerhalb des vorderen Bereichs (40) und innerhalb des Umfangs (36) durch mindestens einen Positionierwulst (38) befestigt ist.

6. Kraftfahrzeug-Motorhaube (10) nach einem der Ansprüche 1 bis 5, **dadurch gekennzeichnet, dass** der vordere Bereich (40) sich über eine Abmessung von 285 Millimetern bezüglich des vorderen Rands der Motorhaube (41) in Längsrichtung des Fahrzeugs erstreckt.

7. Kraftfahrzeug, **dadurch gekennzeichnet, dass** es eine Motorhaube nach einem der vorhergehenden Ansprüche enthält.
